# EUROPÄISCHE PATENTSCHRIFT

(11) **EP 2 818 622 B1**
(45) Veröffentlichungstag und Bekanntmachung des Hinweises auf die Patenterteilung: **30.10.2019**
(21) Anmeldenummer: 14168609.7
(22) Anmeldetag: 16.05.2014
(51) Int. Cl.: E05D 15/24, E06B 3/48

(54) **Sektionaltor für Ladungsträger im Frachtverkehr**
Sectional door for carriers in freight traffic
Porte sectionnelle pour une unité de transport dans le trafic d'expédition

(30) Priorität: 28.06.2013 DE 102013106836
(43) Veröffentlichungstag der Anmeldung: 31.12.2014
(73) Patentinhaber: Novoferm GmbH, 46419 Isselburg (DE)
(72) Erfinder: Dipl.-Ing. Stefan Höfling, 59425 Unna (DE); Ulrich Röder, 56479 Westernohe (DE); Rafal Mickiewicz, 44328 Dortmund (DE)
(74) Vertreter: Lorenz, Bernd Ingo Thaddeus

(56) Entgegenhaltungen:
- EP-A1- 0 304 642
- WO-A1-2009/157790
- DE-A1- 3 930 419
- DE-A1- 19 749 948
- DE-U1- 9 405 483
- DE-U1- 29 706 530
- DE-U1-202004 013 807
- US-A1- 2004 140 065

## Beschreibung

Die Erfindung betrifft ein Sektionaltor, insbesondere für Ladungsträger im Frachtverkehr. Bei dem Ladungsträger kann es sich beispielsweise um den Laderaum eines Kleintransporters oder LKWs handeln. Unter den Begriff "Ladungsträger" fallen insbesondere auch Sattelkoffer und Wechselbrücken, wobei Sattelkoffer Sattelauflieger sind, die der vom Führerhaus eines Motorfahrzeuges getrennt und über eine Sattelkupplung angekuppelt werden, und wobei Wechselbrücken containerartige austauschbare Ladungsträger bezeichnen, die sich vom Trägerfahrzeug trennen lassen.

Das Sektionaltor umfasst ein Torblatt aus gelenkig verbundenen Paneelen, die durch Anschraubbänder schwenkbeweglich verbunden und in seitlichen Laufschienen geführt sind. Die Paneele des Torblattes weisen an ihrer oberen Schmalseite einen konvexen Profilabschnitt auf, an den an der Torblattinnenseite ein stufenförmiger Absatz anschließt. An ihrer unteren Schmalseite weisen die Paneele eine Rippe auf, die im Torblattschließzustand in den stufenförmigen Absatz an der oberen Schmalseite des benachbarten Paneels eingreift. Die Anschraubbänder umfassen einen Schwenkarm, der zwischen zwei Seitenwangen einer Konsole schwenkbar angeordnet und durch eine Achse mit der Konsole verbunden ist.

Ein Sektionaltorblatt mit den vorstehend beschriebenen Merkmalen ist aus DE 20 2004 013 807 U1 bekannt. Das Sektionaltorblatt ist insbesondere für Garagen- und Industrietore bestimmt. Die Paneele werden aus Blechschalen zusammengesetzt und ausgeschäumt. Die ausgeschäumten Blechpaneele sind schwer und aufgrund ihres Gewichtes und ihrer Abmessungen für Anwendungen im Frachtverkehr nicht geeignet. Die Blechschalenkonstruktion und das Ausschäumen der Blechschalen bedingt ferner Maßabweichungen, die die Einsatzmöglichkeit des Sektionaltores außerhalb des Garagen- und Industrietorbereiches einschränken.

Die DE 29 18 638 A1 bezieht sich auf ein Sektionaltor für Anwendungen im Frachtverkehr, beispielsweise als Verschluss für LKW-Anhänger. Die Paneele bestehen aus Platten, die an ihrer unteren Schmalseite eine nutförmige Vertiefung und an ihrer oberen Schmalseite ein trapezförmiges Profil aufweisen. Im Torblattschließzustand greifen die gelenkig miteinander verbundenen Paneele an ihren Schmalseiten nach Art einer Nut- und Federverbindung ineinander. Die Paneele sind durch Anschraubbänder gelenkig miteinander verbunden. Die Anschraubbänder sind als Rollenbänder ausgebildet und weisen eine Achse auf, die zugleich als Achse für die in den seitlichen Laufschienen geführten Laufrollen genutzt werden. Hinsichtlich ihres Flächengewichtes und der Formstabilität ist das Torblatt noch verbesserungsbedürftig. Ferner ergibt sich das Problem, dass sich bei Öffnungs- und Schließbewegungen ein Spalt zwischen den schwenkbeweglich verbundenen Paneelen öffnet und wieder schließt, so dass bei einer manuellen Betätigung des Tores eine Fingerklemmgefahr resultiert.

Vor diesem Hintergrund liegt der Erfindung die Aufgabe zugrunde, ein Sektionaltor für Ladungsträger im Frachtverkehr anzugeben, dessen Torblatt formstabil ist und Querkräfte, die beispielsweise durch eine unzureichend gesicherte Ladung auftreten können, aufnehmen kann. Beim Öffnen und Schließen des Torblattes soll eine Fingerklemmgefahr ausgeschlossen sein. Ferner sollen sowohl ein schneller und einfacher Laufrollenaustausch als auch ein Austausch einzelner Paneele möglich sein.

Gegenstand der Erfindung und Lösung dieser Aufgabe ist ein Sektionaltor nach Anspruch 1.

Ausgehend von einem Sektionaltor, dessen Torblatt die eingangs beschriebenen Merkmale aufweist, wird die Aufgabe erfindungsgemäß dadurch gelöst, dass die Paneele aus stranggeformten Hohlprofilen bestehen, die mehrere durch Querstege begrenzte Kammern aufweisen, wobei die Rippe an der unteren Schmalseite der Paneele als einwandiger Vorsprung des Hohlprofils ausgebildet ist und wobei der korrespondierende stufenförmige Absatz an der oberen Schmalseite der Paneele in das Hohlprofil eingeformt ist. Die einteilig als stranggeformte Hohlprofile gefertigten Paneele zeichnen sich durch ein geringes Gewicht, hohe Formstabilität, exakte Konturen und große Maßgenauigkeit aus. Die durch Anschraubbänder verbundenen Paneele können durch Einstellungen an den Bändern exakt so eingestellt werden, dass sich zwischen den Paneelen im Schließzustand nur ein minimaler Spalt einstellt. Die Rippe an der unteren Schmalseite der Paneele ist im Torblattschließzustand vorzugsweise auf dem stufenförmigen Absatz, der an der oberen Schmalseite des benachbarten Paneels angeformt ist, abgestützt. Durch die Abstützung können die Anschraubbänder entlastet werden. Gleichzeitig trägt die Abstützung der Paneele mit einander zugewandten Schmalseiten dazu bei, dass das Torblatt im Schließzustand formstabil ist. Vorzugsweise bestehen die Hohlprofile aus Aluminium, Leichtmetalllegierungen oder Kunststoff.

Die Konsole der Anschraubbänder ist zweckmäßig in einer Vertiefung der Hohlprofile so angeordnet, dass die Achse der Anschraubbänder im Wesentlichen mit der torblattinnenseitigen Fläche des Paneels fluchtet. Durch diese Anordnung ist unter anderem erreichbar, dass bei einer Schwenkbewegung der Paneele um die Achse der Anschraubbänder über einen großen Schwenkwinkelbereich eine Überdeckung der einander zugewandten Flächen an der unteren und oberen Schmalseite der Paneele gewährleistet ist. Ferner kann der Überstand der Anschraubbänder an der Torblattinnenfläche reduziert werden, so dass der Laderaum des von dem Sektionaltor verschlossenen Ladungsträgers bis zum Torblatt für Frachtgut genutzt werden kann. Vorzugsweise ist die Konsole in die Vertiefung der Hohlprofile eingepasst und an ihrem unteren Ende an einer Schulter der Vertiefung abgestützt. Über die Schulter können axiale Kräfte in das Torblatt eingeleitet und Schraubverbindungen, mit denen die Konsole der Anschraubbänder an den Paneelen befestigt sind, entlastet werden. Durch die Einpassung der Konsolen in zugeordnete Vertiefungen der stranggeformten Hohlprofile ist ferner eine exakte Position der Anschraubbänder sichergestellt. Die exakte Positionierung der Anschraubbänder an den Paneelen trägt maßgeblich dazu bei, dass zwischen den Paneelen ein geringes Spaltmaß realisiert werden kann.

Die als Eingriffschutz ausgebildeten Seitenwangen der Anschraubbänder weisen eine Abschlusskante auf, die vorzugsweise an den stufenförmigen Absatz der Hohlprofile anschließt und ein konvex gekrümmtes Profil aufweist. Das Profil der Abschlusskanten ist an die Bahnkurve angepasst, welche die Rippe bei einer Schwenkbewegung des Paneels um die Achse der Anschraubbänder beschreibt.

Die Hohlprofile weisen zweckmäßig zur Aussteifung der Anlagefläche für die Konsolen einen Quersteg auf, der sich von der torblattaußenseitigen Paneelfläche bis zur torblattinnenseitigen Paneelfläche erstreckt und in Höhe der Scharnierachse der Anschraubbänder an die Anlagefläche angeformt ist.

Zur Abdichtung des Spaltes, der im Torblattschließzustand zwischen den Paneelen verbleibt, sind zweckmäßig Dichtungen vorgesehen. Gemäß einer bevorzugten Ausführung der Erfindung weisen die Paneele an ihrer oberen Schmalseite eine Dichtung auf, die im Schließzustand des Torblattes einen Spalt zwischen einem unteren Rand an der Torblattaußenseite des benachbarten Paneels und einer Schulterfläche des Hohlprofils überbrückt. Zur Befestigung der Dichtung weisen die Hohlprofile an ihrer oberen Schmalseite zwischen der Schulterfläche und dem konvexen Profilabschnitt eine Nut auf. Die Dichtung besteht zweckmäßig aus einem Kunststoffprofil, welches eine in die Nut einsetzbare Wulst sowie eine frei vorstehende Lippe aufweist. Die Lippe ist so bemessen, dass sie in der Torblattschließstellung auf der Schulterfläche des Hohlprofils aufliegt und zwischen der Schulterfläche und dem unteren Rand an der Torblattaußenseite des benachbarten Paneels eingeklemmt ist.

Die Hohlprofile der Paneele weisen an ihrer unteren Schmalseite einen konkaven Profilabschnitt auf, der sich von einem unteren Rand der Hohlprofile an der Torblattaußenseite bis zu einer unmittelbar vor der Rippe angeordneten Nut zur Befestigung einer Dichtung erstreckt. Diese Dichtung ist zweckmäßig als Lippendichtung ausgebildet, welche bei einer Schwenkbewegung der Paneele an dem konvexen Profilabschnitt des benachbarten Paneels und dem konvex gekrümmten Profil an den Seitenwangen der Aufschraubbänder entlang gleitet. Die beschriebenen Dichtungen können einzeln vorgesehen sein oder miteinander auch kombiniert werden.

Benachbarte Paneele des Sektionaltorblattes sind vorzugsweise durch zumindest zwei Anschraubbänder schwenkbeweglich verbunden. Eine weitere vorteilhafte Ausgestaltung sieht dabei vor, dass die Achsen der beiden Anschraubbänder an den Längsseiten des Torblattes vorstehen und dass auf den Achsen Rollen oder Rollenanordnungen zur Führung in den Laufschienen gelagert sind. Gemäß einer bevorzugten Ausführung der Erfindung sind die Paneele des Sektionaltorblattes mit Rollenanordnungen in den Laufschienen geführt, die jeweils einen auf der Scharnierachse der Anschraubbänder drehbar gelagerten Träger und mindestens eine an den Träger drehbeweglich gelagerte Rolle aufweisen. Gemäß einer besonders vorteilhaften Ausgestaltung sind an dem Träger der Rollenanordnungen zwei Rollen drehbar gelagert, deren Abstand zueinander verstellbar ist. Die Rollenanordnungen bilden sogenannte Tandemrollen und ermöglichen eine besonders leichtgängige Führung der Paneele. Die Laufrollen bestehen zweckmäßigerweise aus Edelstahl, sind kugelgelagert, gekapselt und einstellbar.

Das in der Schließstellung oberste Paneel des Torblattes wird im Folgenden auch als Kopfpaneel bezeichnet. An das Kopfpaneel können Laufwagen angeschlossen sein, die in den Führungsschienen geführt sind und einen mit dem Kopfpaneel schwenkbeweglich verbundenen Arm aufweisen. Der Arm überbrückt einen Abstand zwischen der Torblattebene und einem bogenförmig gekrümmten Abschnitt der seitlichen Laufschienen. Der Laufwagen hält das Kopfpaneel des Torblattes in einer vertikalen Endposition. Das Kopfpaneel kann, anders als die unterseitig anschließenden Paneele, an seiner oberen Schmalseite eine ebene Abschlussfläche aufweisen.

Das in der Schließstellung unterste Paneel weist an seiner unteren Schmalseite Formschlussausbildungen zur Befestigung einer Bodendichtung auf.

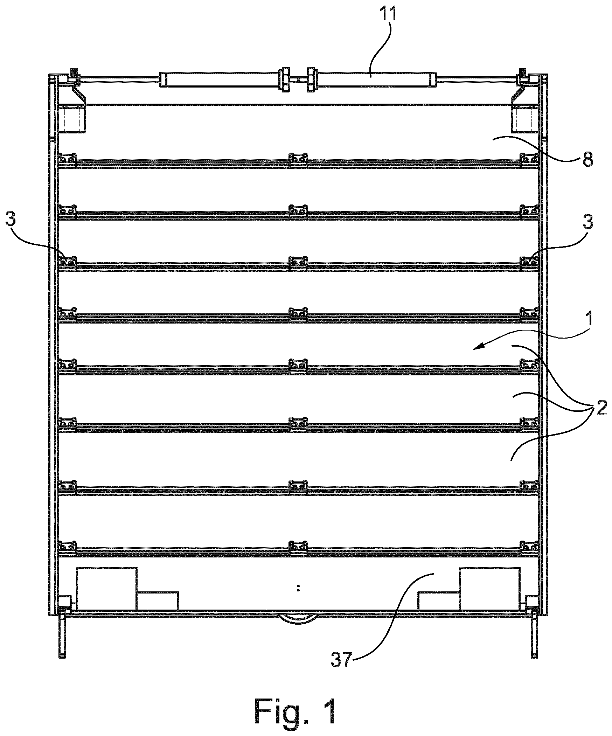

Im Folgenden wird die Erfindung anhand einer lediglich ein Ausführungsbeispiel darstellenden Zeichnung erläutert. Es zeigen schematisch
- Fig. 1: eine Ansicht auf die Innenseite eines Sektionaltores,
- Fig. 2: eine Seitenansicht des in Fig. 1 dargestellten Sektionaltores,

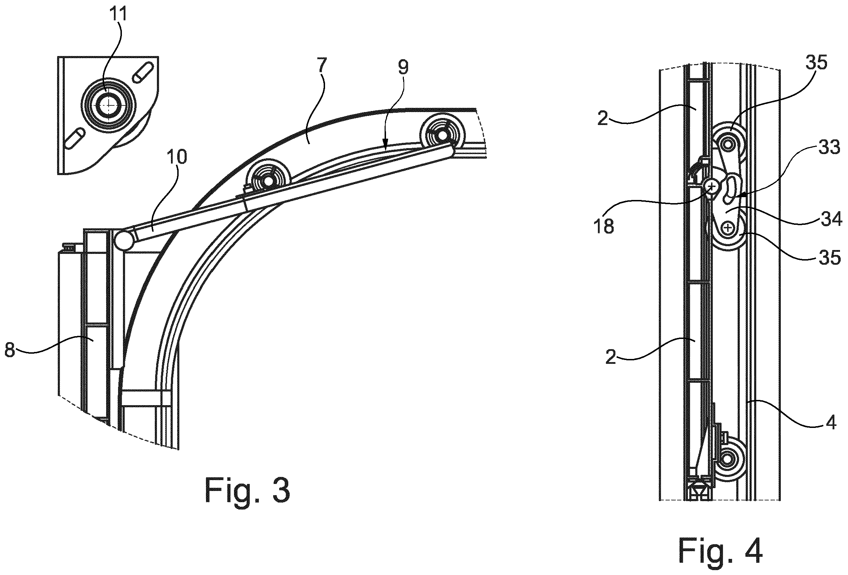

- Fig. 3: das Detail A aus Fig. 2,
- Fig. 4: das Detail B aus Fig. 2,
- Fig. 5a und 5b: einen Ausschnitt des Sektionaltorblattes in einer Seitenansicht in verschiedenen Funktionsstellungen,
- Fig. 6: die Seitenansicht eines Paneels des Sektionaltorblattes,
- Fig. 7: das Detail C aus Fig. 6,
- Fig. 8: das Detail D aus Fig. 6,
- Fig. 9: die Seitenansicht des Kopfpaneels,
- Fig. 10: die Seitenansicht des in Schließstellung untersten Paneels des Sektionaltores.

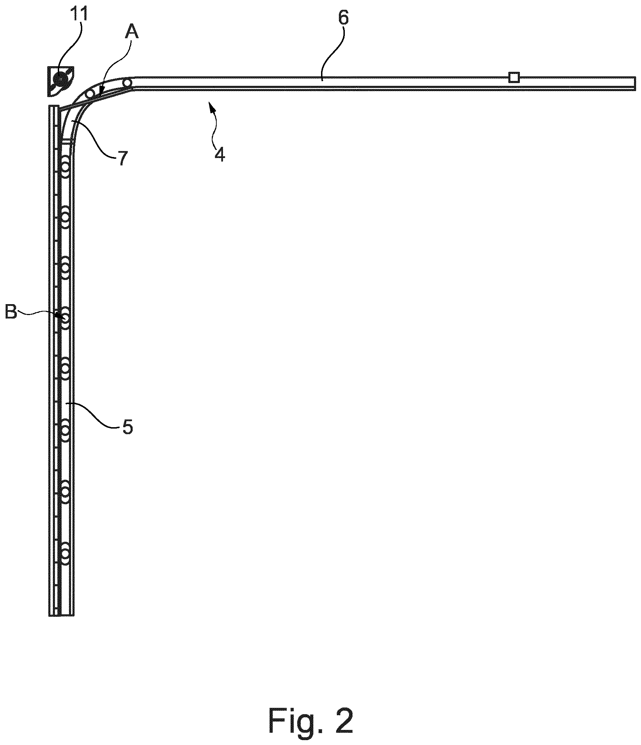

Das in den Figuren dargestellte Sektionaltor ist für Ladungsträger im Frachtverkehr, beispielsweise für Laderäume von Transportfahrzeugen, Sattelkoffer oder Wechselbrücken bestimmt. Das Sektionaltor umfasst ein Torblatt 1 aus gelenkig verbundenen Paneelen 2, die durch Anschraubbänder 3 schwenkbeweglich verbunden und in seitlichen Laufschienen 4 geführt sind. Die Laufschienen 4 weisen einen vertikalen Abschnitt 5, einen horizontalen Abschnitt 6 sowie einen bogenförmigen Verbindungsbereich 7 auf. Das in der Torblattschließstellung oberste Paneel, welche auch als Kopfpaneel 8 bezeichnet wird, ist an Laufwagen 9 angeschlossen, die in den Laufschienen 4 geführt sind und einen mit dem Kopfpaneel 8 schwenkbeweglich verbunden Arm 10 aufweisen. Gemäß der Darstellung in Fig. 2 hält der Arm 10 das Kopfpaneel 8 in der Torblattschließstellung in einer vertikalen Ausrichtung. Das Torblatt 1 ist an eine Gewichtsausgleichsvorrichtung 11 angeschlossen, die im Ausführungsbeispiel als Torsionsfederwelle ausgebildet ist. Die Gewichtsausgleichsvorrichtung kann in an sich bekannter Weise auch Zugfedern aufweisen.

Sie ist durch Zugseile an das untere Ende des Torblattes 1 angeschlossen. Die Zugseile sind in Zargenprofilen der Torzarge angeordnet und von außen nicht sichtbar.

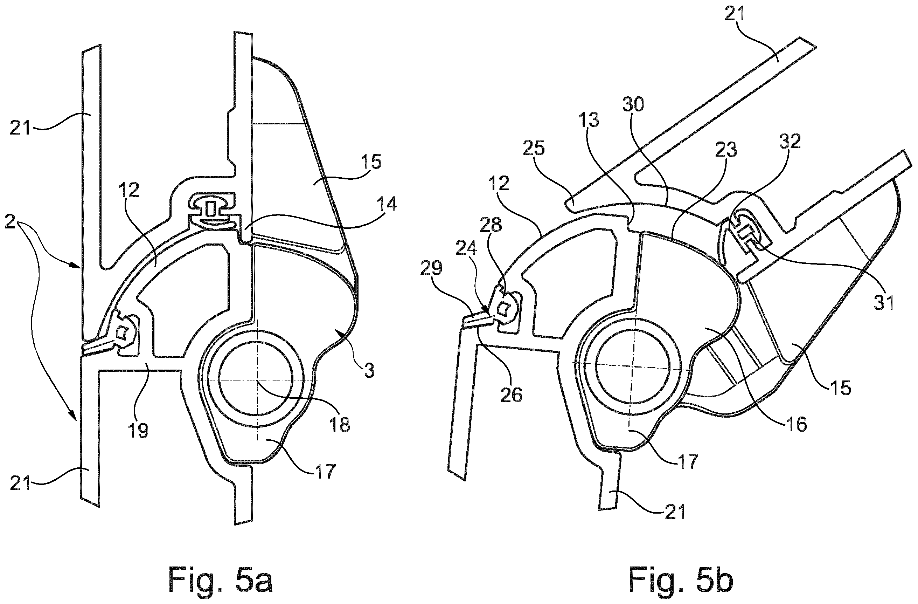

In den Fig. 5a und 5b sind die einander zugewandten Abschnitte von zwei gelenkig verbundenen Paneelen 2 des Sektionaltores dargestellt. Die Fig. 5a zeigt die Schließstellung, in der die Paneele 2 vertikal ausgerichtet sind und eine senkrechte Torblattfläche bilden. Beim Öffnen und Schließen des Tores werden die Paneele 2 entlang den seitlichen Laufschiene 4 geführt und durchlaufen den bogenförmigen Verbindungsbereich 7 der Laufschienen 4. Dabei führen die Paneele 2 relative Schwenkbewegungen zueinander aus, wie dies in Fig. 5b dargestellt ist. Die Fig. 5b zeigt den maximalen Schwenkwinkel a. Zwischen den Flächen der einander zugewandten Schmalseiten der Paneele 2 verbleibt eine Überlappung. Diese Überlappung verhindert, dass beim manuellen Öffnen und Schließen des Torblattes Finger gequetscht werden können.

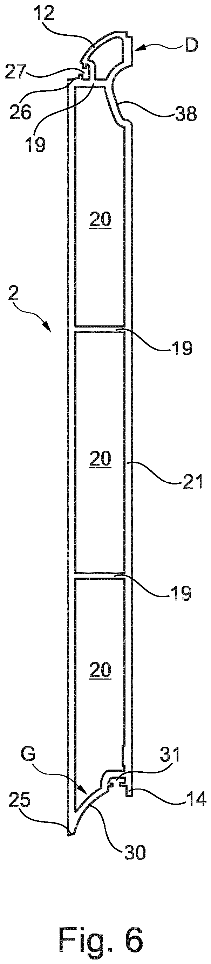

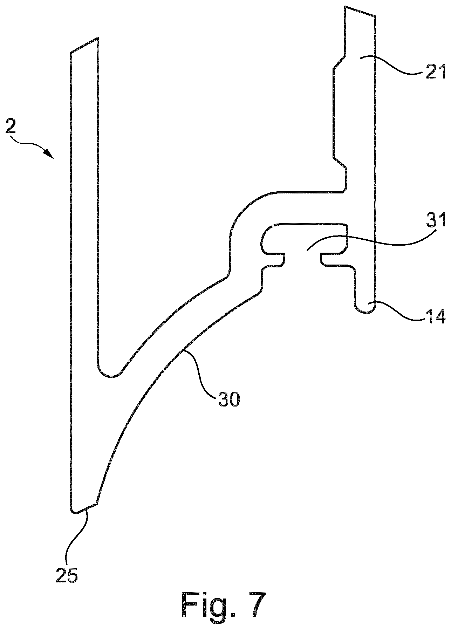

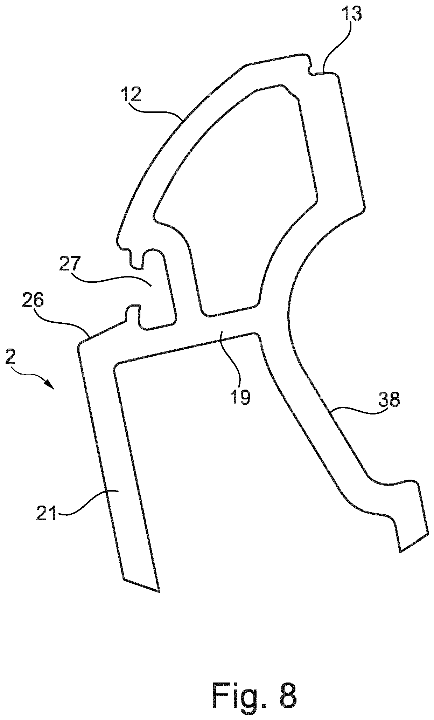

Gemäß der Darstellung in den Fig. 5a und 5b weisen die Paneele 2 an ihrer oberen Schmalseite einen konvexen Profilabschnitt 12 auf, an den an der Torblattinnenseite ein stufenförmiger Absatz 13 anschließt. An ihrer unteren Schmalseite weisen die Paneele 2 eine Rippe 14 auf, die im Torblattschließzustand in den stufenförmigen Absatz 13 an der oberen Schmalseite des benachbarten Paneels eingreift. Die Anschraubbänder 3, welche die Paneele 2 gelenkbeweglich verbinden, weisen einen Schwenkarm 15 auf, der zwischen zwei Seitenwangen 16 einer Konsole 17 schwenkbar angeordnet und durch eine Achse 18 mit der Konsole 17 verbunden ist. Die Achse 18 wird nachfolgend auch als Scharnierachse bezeichnet. Die Seitenwangen 16 bilden einen seitlichen Eingriffschutz an der Innenseite des Torblattes 1 und verhindern auch dort eine Fingerklemmgefahr. Gemäß der Darstellung in den Fig. 6 bis 8 bestehen die Paneele 2 aus stranggeformten Hohlprofilen 21, die mehrere durch Querstege 19 begrenzte Kammern 20 aufweisen. Eine als Vertiefung ausgebildete Anlagefläche 38 für die Konsolen 17 der Anschraubbänder ist durch einen Quersteg 19 ausgesteift, der sich von der torblattaußenseitigen Paneelfläche bis zur torblattinnenseitigen Paneelfläche erstreckt und in Höhe der Scharnierachse 18 an die Anlagefläche 38 angeformt ist.

In Verbindung mit den Fig. 5a und 5b ist ersichtlich, dass die Konsole 17 der Anschraubbänder 3 in der beschriebenen Vertiefung der Hohlprofile 21 so angeordnet ist, dass die Achse 18 der Anschraubbänder 3 im Wesentlichen mit der torblattinnenseitigen Fläche des Paneels 2 fluchtet. Ferner ist die Konsole 17 in die Vertiefung eingepasst und an ihrem unteren Ende an einer Schulter 22 der Vertiefung abgestützt. Hierdurch ist die Position der Anschraubbänder 3 exakt festgelegt. Die als Eingriffschutz ausgebildeten Seitenwangen 16 der Anschraubbänder 3 weisen ferner eine Abschlusskante 23 auf, die an den stufenförmigen Absatz 13 der Hohlprofile 21 anschließt und ein konvex gekrümmtes Profil aufweist. Das Profil der Abschlusskanten 23 ist an die Bahnkurve, welche die Rippe 14 bei einer Schwenkbewegung des Paneels 2b beschreibt, angepasst.

Die Paneele 2 weisen an ihrer oberen Schmalseite eine Dichtung 24 auf, die im Schließzustand des Torblattes 1 einen Spalt zwischen einem unteren Rand 25 an der Torblattseite des benachbarten Paneels und einer Schulterfläche 26 des Hohlprofils 21 überbrückt. Zur Befestigung der Dichtung 24 ist eine Nut 27 vorgesehen, die an der oberen Schmalseite der Hohlprofile 21 zwischen der Schulterfläche 26 und dem konvexen Profilabschnitt 12 angeordnet ist. Die Dichtung 24 weist eine in die Nut einsetzbare Wulst 28 sowie eine frei vorstehende Lippe 29 auf. In der Torblattschließstellung liegt die Lippe 29 auf der Schulterfläche 26 auf und ist zwischen der Schulterfläche 26 und dem unteren Rand 25 des gelenkig angeschlossenen Paneels eingeklemmt (Fig. 5a).

Die Hohlprofile 21 weisen an ihrer unteren Schmalseite einen konkaven Profilabschnitt 30 auf, der sich von einem unteren Rand 25 der Hohlprofile 21 an der Torblattaußenseite bis zu einer unmittelbar vor der Rippe 14 angeordneten Nut 31 zur Befestigung einer Dichtung 32 erstreckt. In der Nut 31 an der unteren Schmalseite des Paneels ist eine Lippendichtung 32 angeordnet, die bei einer Schwenkbewegung der Paneele 2 an dem konvexen Profilabschnitt 12 des benachbarten Paneels und den konvex gekrümmten Abschlusskanten 23 an den Seitenwangen 16 der Anschraubbänder 3 entlang gleitet.

In der Torblattschließstellung ist die Rippe 14 an dem stufenförmigen Absatz 13 der oberen Schmalseite des benachbarten Paneels abgestützt. Durch die Abstützung können die Anschraubbänder 3 und Schraubverbindungen, mit denen die Anschraubbänder 3 an den Paneelen 2 befestigt sind, entlastet werden.

Aus den Figuren geht auch hervor, dass die Paneele 2 jeweils durch zumindest zwei Anschraubbänder 3 schwenkbeweglich verbunden sind, wobei die Anschraubbänder 3 an den Seiten des Torblattes montiert sind. Die Scharnierachsen 18 der seitlich angeordneten Anschraubbänder 3 stehen an den Längsseiten des Torblattes 1 vor und werden zur Lagerung der in den Laufschienen 4 bewegten Rollen bzw. Rollenanordnungen 33 genutzt. Die Rollenanordnungen 33 weisen jeweils einen auf der Achse 18 drehbar gelagerten Träger34 auf. An dem Träger 34 sind zwei Rollen 35 drehbeweglich gelagert, deren Abstand zueinander verstellbar ist. Die Rollen 35 sind mit Wälzlagern ausgestattet und ermöglichen einen reibungsarmen Lauf.

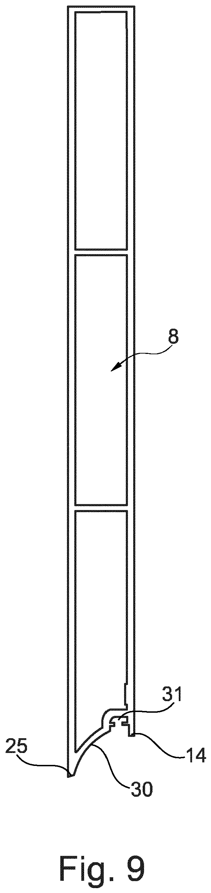

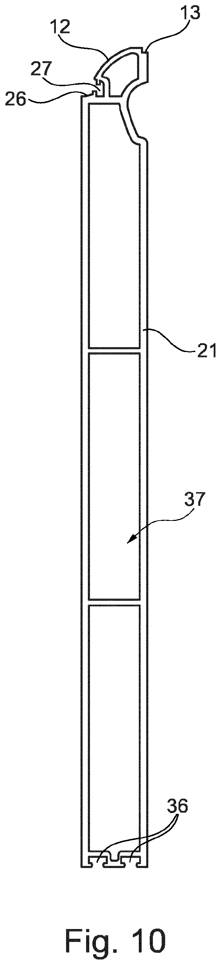

Aus der Fig. 9 ist ersichtlich, dass das Kopfpaneel 8 an seiner oberen Schmalseite eine ebene Abschlussfläche aufweisen kann. Das in der Schließstellung unterste Paneel 37 weist an seiner unteren Schmalseite zweckmäßig Formschlussausbildungen 36 zur Befestigung einer Bodendichtung auf (Fig. 10).

## Patentansprüche

1. Sektionaltor für Ladungsträger im Frachtverkehr, mit einem Torblatt (1) aus gelenkig verbundenen Paneelen (2), die durch Anschraubbänder (3) schwenkbeweglich verbunden und in seitlichen Laufschienen (4) geführt sind,
wobei die Paneele (2) an ihrer oberen Schmalseite einen konvexen Profilabschnitt (12) aufweisen, an den an der Torblattinnenseite ein stufenförmiger Absatz (13) anschließt,
wobei die Paneele (2) an ihrer unteren Schmalseite eine Rippe (14) aufweisen, die im Torblattschließzustand in den stufenförmigen Absatz (13) an der oberen Schmalseite des benachbarten Paneels (2) eingreift, und
wobei die Anschraubbänder (3) einen Schwenkarm (15) aufweisen, der zwischen zwei Seitenwangen (16) einer Konsole (17) schwenkbar angeordnet und durch eine Achse(18) mit der Konsole (17) verbunden ist,
**dadurch gekennzeichnet, dass** die Paneele (2) aus stranggeformten Hohlprofilen (21) bestehen, die mehrere durch Querstege (19) begrenzte Kammern (20) aufweisen, wobei die Rippe (14) an der unteren Schmalseite der Paneele (2) als einwandiger Vorsprung des Hohlprofils (21) ausgebildet ist und wobei der korrespondierende stufenförmige Absatz (13) an der oberen Schmalseite der Paneele (2) in das Hohlprofil (21) eingeformt ist, dass die Konsole (17) der Anschraubbänder (3) in einer Vertiefung der Hohlprofile (21) so angeordnet ist, dass die Achse (18) der Anschraubbänder (3) im Wesentlichen mit der torblattinnenseitigen Fläche des Paneels (2) fluchtet und dass das Hohlprofil (21) zur Aussteifung einer Anlagefläche (38) für die Konsolen einen Quersteg (19) aufweist, der sich von der torblattaußenseitigen Paneelfläche bis zur torblattinnenseitigen Paneelfläche erstreckt und in Höhe der Achse (18) der Anschraubbänder an die Anlagefläche (38) für die Konsolen angeformt ist.

2. Sektionaltor nach Anspruch 1, **dadurch gekennzeichnet, dass** die Konsole (17) in die Vertiefung eingepasst ist und an ihrem unteren Ende an einer Schulter (22) der Vertiefung abgestützt ist.

3. Sektionaltor nach einem der Ansprüche 1 oder 2 , **dadurch gekennzeichnet, dass** die als Eingriffschutz ausgebildeten Seitenwangen (16) der Anschraubbänder (3) eine Abschlusskante (23) aufweisen, die an den stufenförmigen Absatz (13) der Hohlprofile (21) anschließt und ein konvex gekrümmtes Profil aufweist, wobei das Profil der Abschlusskanten (23) an die Bahnkurve, welche die Rippe (14) bei einer Schwenkbewegung des Paneels (2) beschreibt, angepasst ist

4. Sektionaltor nach einem der Ansprüche 1 bis 3, **dadurch gekennzeichnet, dass** die Paneele (2) an ihrer oberen Schmalseite eine Dichtung (24) aufweisen, die im Schließzustand des Torblatts einen Spalt zwischen einem unteren Rand (25) an der Torblattaußenseite des benachbarten Paneels und einer Schulterfläche (26) des Hohlprofils (21) überbrückt.

5. Sektionaltor nach Anspruch 4, **dadurch gekennzeichnet, dass** die Hohlprofile (21) an ihrer oberen Schmalseite zwischen der Schulterfläche (26) und dem konvexen Profilabschnitt (12) eine Nut (27) zur Befestigung der Dichtung (24) aufweisen und dass die Dichtung (24) eine in die Nut (27) eingesetzte Wulst (28) sowie eine frei vorstehende Lippe (29) aufweist, wobei die Lippe (29) in der Torblattschließstellung auf der Schulterfläche (26) aufliegt.

6. Sektionaltor nach einem der Ansprüche 1 bis 5, **dadurch gekennzeichnet, dass** die Hohlprofile (21) an ihrer unteren Schmalseite einen konkaven Profilabschnitt (30) aufweisen, der sich von einem unteren Rand (25) der Hohlprofile (21) an der Torblattaußenseite bis zu einer unmittelbar vor der Rippe (14) angeordneten Nut (31) zur Befestigung einer Dichtung erstreckt.

7. Sektionaltor nach Anspruch 6, **dadurch gekennzeichnet, dass** in der Nut (31) an der unteren Schmalseite der Paneele eine Lippendichtung (32) angeordnet ist, die bei einer Schwenkbewegung der Paneele an dem konvexen Profilabschnitt (12) des benachbarten Paneels und der konvex gekrümmten Abschlusskante (23) an den Seitenwangen (16) der Anschraubbänder (3) entlang gleitet.

8. Sektionaltor nach einem der Ansprüche 1 bis 7, **dadurch gekennzeichnet, dass** benachbarte Paneele durch zumindest zwei Anschraubbänder (3) schwenkbeweglich verbunden sind, wobei die Achsen (18) der beiden Anschraubbänder (3) an den Längsseiten des Torblatts (1) vorstehen und auf den Achsen (18) Rollen oder Rollenanordnungen (33) zur Führung in den Laufschienen (4) gelagert sind.

9. Sektionaltor nach Anspruch 8, **dadurch gekennzeichnet, dass** die Rollenanordnungen (33) jeweils einen auf der Achse (18) drehbar gelagerten Träger (34) und mindestens eine an den Träger (34) drehbeweglich gelagerte Rolle aufweisen.

10. Sektionaltor nach Anspruch 9, **dadurch gekennzeichnet, dass** an dem Träger (34) zwei Rollen (35) drehbar gelagert sind, deren Abstand zueinander verstellbar ist.

11. Sektionaltor nach einem der Ansprüche 1 bis 10, **dadurch gekennzeichnet, dass** an das in der Schließstellung oberste Paneel (8) des Torblatts (1) Laufwagen (9) angeschlossen sind, die in den Laufschienen (4) geführt sind und einen mit dem obersten Paneel (8) schwenkbeweglich verbundenen Arm (10) aufweisen.

12. Sektionaltor nach Anspruch 11, **dadurch gekennzeichnet, dass** das oberste Paneel (8) an seiner oberen Schmalseite eine ebene Abschlussfläche aufweist.

13. Sektionaltor nach einem der Ansprüche 1 bis 12, **dadurch gekennzeichnet, dass** das in der Schließstellung unterste Paneel (37) an seiner unteren Schmalseite Formschlussausbildungen (36) zur Befestigung einer Bodendichtung aufweist.

14. Verwendung eines Sektionaltors nach einem der Ansprüche 1 bis 13 zum Verschließen von Ladungsträgern im Frachtverkehr, insbesondere als Verschluss für LKW-Anhänger.

## Claims

1. A sectional door for load carriers in freight transport, comprising a door leaf (1) of panels (2) which are connected in an articulated manner and which are pivotally connected by screw-on strips (3) and guided in lateral runner rails (4),
wherein the panels (2) comprise at their upper narrow side a convex profile section (12), which is adjoined at the door leaf inner side by a step-shaped shoulder (13),
wherein, at their lower narrow side, the panels (2) comprise a rib (14), which in the closed state of the door leaf engages in the step-shaped shoulder (13) at the upper narrow side of the adjacent panel (2), and
wherein the screw-on strips (3) include a pivoting arm (15), which is arranged pivotably between two side cheeks (16) of a bracket (17) and is connected by an axle (18) to the bracket (17),
**characterised in that** the panels (2) consist of extruded hollow profiles (21), which comprise a plurality of chambers (20) bounded by transverse webs (19), wherein the rib (14) at the lower narrow side of the panels (2) is constituted as a single-wall projection of the hollow profile (21) and wherein the corresponding step-shaped shoulder (13) is integrally moulded into the hollow profile (21) at the upper narrow side of the panels (2), that the bracket (17) of the screw-on strips (3) is arranged in a recess of the hollow profiles (21), such that the axle (18) of the screw-on strips (3) is substantially aligned with the surface of the panel (2) at the inner side of the door leaf, and that the hollow profile (21) comprises a transverse web (19) to stiffen the seating surface (38) for the brackets, said transverse web extending from the panel surface on the outer side of the door leaf up to the panel surface on the inner side of the door leaf and being integrally moulded on the seating surface (38) for the brackets at the level of the axle (18) of the screw-on strips.

2. The sectional door according to claim 1, **characterised in that** the bracket (17) is fitted into the recess and is supported at its lower end on a shoulder (22) of the recess.

3. The sectional door according to any one of claims 1 or 2, **characterised in that** the side cheeks (16) of the screw-on strips (3) constituted as an intervention protection comprise a closing edge (23), which adjoins the step-shaped shoulder (13) of the hollow profiles (21) and has a convex-curved profile, wherein the profile of the closing edges (23) is adapted to the trajectory which the rib (14) describes during a pivoting movement of the panel (2).

4. The sectional door according to any one of claims 1 to 3, **characterised in that** the panels (2) comprise at their upper narrow side a seal (24), which in the closed state of the door leaf bridges a gap between a lower edge (25) of the adjacent panel at the outer side of the door leaf and a shoulder surface (26) of the hollow profile (21).

5. The sectional door according to claim 4, **characterised in that**, in order to fix the seal (24), the hollow profiles (21) comprise a groove (27) at their upper narrow side between the shoulder surface (26) and the convex profile section (12) and that the seal (24) comprises a bulge (28) which can be inserted into the groove (27) as well as a freely projecting lip (29), wherein the lip (29) is supported on the shoulder surface (26) in the closed position of the door leaf.

6. The sectional door according to any one of claims 1 to 5, **characterised in that** the hollow profiles (21) comprise at their lower narrow side a concave profile section (30), which extends from a lower edge (25) of the hollow profiles (21) at the outer side of the door leaf up to a groove (31) arranged directly in front of the rib (14) for fixing a seal.

7. The sectional door according to claim 6, **characterised in that**, arranged in the groove (31) at the lower narrow side of the panels is a lip seal (32), which during a pivoting movement of the panels slides along convex profile section (12) of the adjacent panel and the convex-curved closing edge (23) on side cheeks (16) of screw-on strips (3).

8. The sectional door according to any one of claims 1 to 7, **characterised in that** adjacent panels are connected pivotally by at least two screw-on strips (3), wherein the axles (18) of the two screw-on strips (3) project at the longitudinal sides of the door leaf (1) and rollers or roller arrangements (33) for guidance in the runner rails (4) are mounted on the axles (18).

9. The sectional door according to claim 8, **characterised in that** the roller arrangements (33) in each case comprise a carrier (34) mounted rotatably on the hinge axle (18) and at least one roller mounted rotatably on the carrier (34).

10. The sectional door according to claim 9, **characterised in that** two rollers (35) are mounted rotatably on the carrier (34), the spacing between which rollers from one another is adjustable.

11. The sectional door according to any one of claims 1 to 10, **characterised in that** carriages (9) are connected to the uppermost panel (8) of the door leaf (1) in the closed position, which carriages are guided in the runner rails (4) and comprise an arm (10) connected pivotally to the uppermost panel (8).

12. The sectional door according to claim 11, **characterised in that** the uppermost panel (8) comprises a flat closing face at its upper narrow side.

13. The sectional door according to any one of claims 1 to 12, **characterised in that** the lowest panel (37) in the closed position comprises at its lower narrow side form-fit formations (36) for fixing a bottom seal.

14. Use of a sectional door according to any one of claims 1 to 13 for closing load carriers in freight transport, in particular as a closure for lorry trailers.

## Revendications

1. Porte sectionnelle pour porte-charges dans le transport de marchandises, avec un vantail de porte (1) formé de panneaux (2) reliés de façon articulée, lesquels sont reliés de manière pivotante par des bandes de vissage (3) et sont guidés dans des rails de guidage latéraux (4),
dans laquelle les panneaux (2) présentent, sur leur côté étroit supérieur, une partie profilée convexe (12) avec laquelle un décrochement étagé (13) est en jonction au niveau du côté intérieur de vantail,
dans laquelle les panneaux (2) présentent une nervure (14) sur leur côté étroit inférieur laquelle, à l'état de fermeture du vantail de porte, se met en prise avec le décrochement étagé (13) sur le côté étroit supérieur du panneau voisin (2), et
dans laquelle les bandes de vissage (3) présentent un bras articulé, lequel est disposé de manière pivotante (15) entre deux joues latérales (16) d'une console (17) et est relié par un axe (18) à la console (17), **caractérisée en ce que** les panneaux (2) se composent de profilés creux (21) moulés par barres, lesquels présentent plusieurs chambres (20) délimitées par des nervures transversales (19), dans laquelle la nervure (14) au niveau du côté étroit inférieur des panneaux (2) est réalisée en tant que saillie à paroi unique du profilé creux (21) et dans laquelle le décrochement étagé (13) correspondant au niveau du côté étroit supérieur des panneaux (2) est moulé dans le profilé creux (21), que la console (17) des bandes de vissage (3) est disposée dans une cavité des profilés creux (21) de manière à ce que l'axe (18) des bandes de vissage (3) soit sensiblement en alignement avec la surface du côté intérieur de vantail du panneau (2) et que la profilé creux (21) présente, pour le raidissage d'une surface de butée (38) pour les consoles, une nervure transversale (19) qui s'étend depuis la surface de panneau du côté extérieur de vantail jusqu'à la surface de panneau du côté intérieur de vantail et est moulée à hauteur de l'axe (18) des bandes de vissage sur la surface de butée (38) pour les consoles.

2. Porte sectionnelle selon la revendication 1, **caractérisée en ce que** la console (17) est adaptée dans la cavité et est en appui sur son extrémité inférieure au niveau d'un épaulement (22) de la cavité.

3. Porte sectionnelle selon l'une des revendications 1 ou 2, **caractérisée en ce que** les joues latérales (16), réalisées en tant que protection anti-manipulation, des bandes de vissage (3) présentent un bord d'extrémité (23) qui est en jonction avec le décrochement étagé (13) des profilés creux (21) et qui présente un profil courbé de manière convexe, dans laquelle le profil des bords d'extrémité (23) est adapté à la trajectoire que décrit la nervure (14) lors d'un mouvement de pivotement du panneau (2).

4. Porte sectionnelle selon l'une des revendications 1 à 3, **caractérisée en ce que** les panneaux (2) présentent, sur leur côté étroit supérieur, une garniture d'étanchéité (24) laquelle, à l'état de fermeture du vantail de porte, enjambe un interstice entre un bord inférieur (25) sur le côté extérieur de vantail du panneau voisin et une surface d'épaulement (26) du profilé creux (21).

5. Porte sectionnelle selon la revendication 4, **caractérisée en ce que** les profilés creux (21) présentent, sur leur côté étroit supérieur entre la surface d'épaulement (26) et la partie profilée convexe (12), une rainure (27) pour la fixation de la garniture d'étanchéité (24) et que la garniture d'étanchéité (24) présente un bourrelet (28) placé dans la rainure (27) ainsi qu'une lèvre (29) en saillie libre, dans laquelle, dans la position de fermeture du vantail de porte, la lèvre (29) repose sur la surface d'épaulement (26).

6. Porte sectionnelle selon l'une des revendications 1 à 5, **caractérisée en ce que** les profilés creux (21) présentent, sur leur côté étroit inférieur, une partie profilée concave (30) qui s'étend depuis un bord inférieur (25) des profilés creux (21) sur le côté extérieur de vantail jusqu'à une rainure (31), disposée directement devant la nervure (14), pour la fixation d'une garniture d'étanchéité.

7. Porte sectionnelle selon la revendication 6, **caractérisée en ce que**, dans la rainure (31), sur le côté étroit inférieur des panneaux, un joint à lèvre (32) est disposé lequel, en cas de mouvement de pivotement des panneaux, glisse le long de la partie profilée convexe (12) du panneau voisin et du bord d'extrémité courbé de manière convexe (23) au niveau des joues latérales (16) des bandes de vissage (3).

8. Porte sectionnelle selon l'une des revendications 1 à 7, **caractérisée en ce que** des panneaux voisins sont reliés de manière pivotante par au moins deux bandes de vissage (3), dans laquelle les axes (18) des deux bandes de vissage (3) font saillie au niveau des côtés longitudinaux du vantail de porte (1) et des rouleaux ou agencements de rouleaux (33) sont montés sur les axes (18) pour le guidage dans les rails de guidage (4) .

9. Porte sectionnelle selon la revendication 8, **caractérisée en ce que** les agencements de rouleaux (33) présentent respectivement un support (34) monté rotativement sur l'axe (18) et au moins un rouleau monté de manière rotative sur le support (34).

10. Porte sectionnelle selon la revendication 9, **caractérisée en ce que** deux rouleaux (35) sont montés de manière rotative sur le support (34) dont la distance entre eux est réglable.

11. Porte sectionnelle selon l'une des revendications 1 à 10, **caractérisée en ce que** des chariots (9) sont reliés au panneau le plus haut (8) dans la position de fermeture du vantail de porte (1), lesquels sont guidés dans les rails de guidage (4) et présentent un bras (10) relié de manière pivotante au panneau le plus haut (8).

12. Porte sectionnelle selon la revendication 11, **caractérisée en ce que** le panneau le plus haut (8) présente, sur son côté étroit supérieur, une surface de terminaison plane.

13. Porte sectionnelle selon l'une des revendications 1 à 12, **caractérisée en ce que** le panneau le plus bas (37) dans la position de fermeture présente, sur son côté étroit inférieur, des formations à complémentarité de formes (36) pour la fixation d'un dispositif d'étanchéité de sol.

14. Utilisation d'une porte sectionnelle selon l'une des revendications 1 à 13 pour la fermeture de portes-charges dans le transport de marchandises, en particulier en tant que fermeture pour des remorques de poids-lourds.
